# EUROPEAN PATENT SPECIFICATION

(11) **EP 1 643 152 B1**
(45) Date of publication and mention of the grant of the patent: **03.02.2010**
(21) Application number: 05021438.6
(22) Date of filing: 30.09.2005
(51) Int. Cl.: F16D 65/20, F16D 65/00

(54) **Hydraulic vehicular disc brake**
Hydraulische Fahrzeugbremse
Frein de véhicule hydraulique

(30) Priority: 30.09.2004 JP 2004286016
(43) Date of publication of application: 05.04.2006
(73) Proprietor: NISSIN KOGYO CO., LTD., Ueda-shi, Nagano-ken (JP)
(72) Inventor: Hatakoshi, Genichi, Ueda-shi, Nagano-ken (JP); Fujii, Kenichi, Ueda-shi, Nagano-ken (JP)
(74) Representative: HOFFMANN EITLE

(56) References cited:
- DE-A1- 4 104 070
- US-A- 3 377 076
- US-A- 5 325 940
- US-A1- 2003 024 777
- PATENT ABSTRACTS OF JAPAN vol. 1996, no. 11, 29 November 1996 (1996-11-29) -& JP 08 177910 A (NISSAN MOTOR), 12 July 1996 (1996-07-12)

## Description

### BACKGROUND OF THE INVENTION

### 1. Field of the Invention

The present invention relates to a hydraulic vehicular disc brake and, more particularly, relates to a piston seal and a piston seal fitting groove in a hydraulic vehicular disc brake, in which a piston seal for supporting a piston liquid-tight and movably and for rolling back of the piston is fitted in a piston seal fitting groove formed circumferentially in the inner peripheral of a cylinder bore.

### 2. Description of the Background Art

The vehicular hydraulic disc brake is constituted such that: a piston is slidably fitted in a bottomed cylinder bore having an opening at a disc rotor side. The piston is moved forward toward a disc rotor by hydraulic fluid which is fed to an inside of a hydraulic pressure chamber defined between a piston and the bottom portion of a cylinder bore, so that friction pads are pushed onto the side faces of the disc rotor thereby to establish a braking force. In the inner peripheral of the cylinder bore, there is circumferentially formed a piston seal fitting groove in which a piston seal is fitted to hold the piston liquid-tight and movably . Both of the cross sectional shapes of the piston seal and the piston seal fitting grooves are rectangular. Restoring force of the piston seal is generated by elastically deformation caused by sliding contact with a frontward movement of the piston at a braking time, By thus obtained restoring force, the piston after relieved from the braking force is moved back (or rolled back) to a predetermined stroke thereby to adjust the clearance between the friction pads and the disc rotor.

In some shapes of the piston seal fitting groove, the elastic deformation of the piston seal at the forward movement of the piston is allowed to achieve a predetermined rollback amount by inclining an entirety of the cylinder bore open side wall face of the piston seal fitting groove toward the cylinder bore opening thereby to establish a large clearance between the cylinder bore open side wall face and the cylinder bore open side face of the piston seal (as referred to Japanese Patent Examined Publication No. JP-B-44-23850, for example) , or by forming the cylinder bore open side wall face of the piston seal fitting groove into an arc shape bulging inward of the groove (as referred to Japanese Utility Model Unexamined Publication No. JP-UM-A-52-41446, for example).

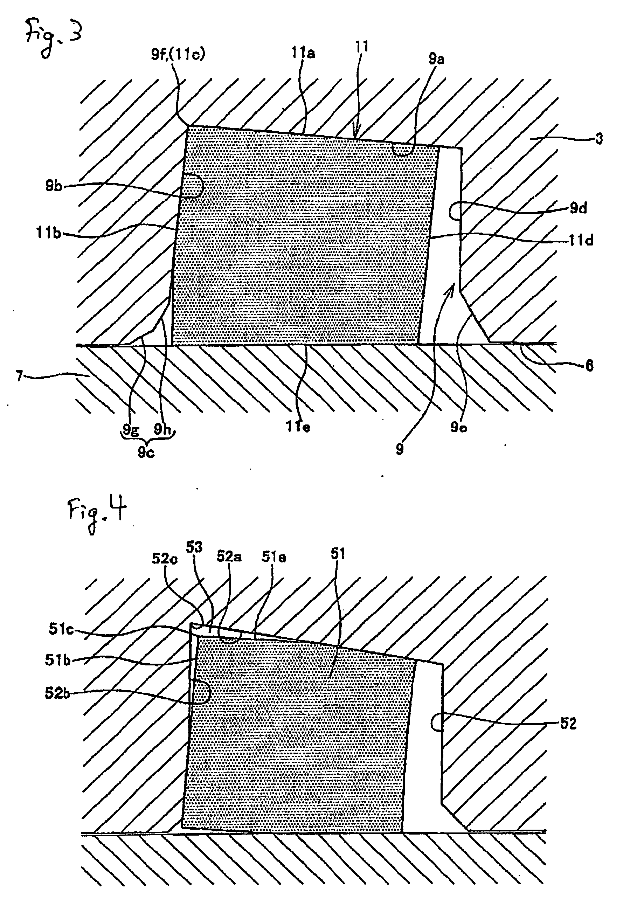

In addition, a bottom face of the piston seal fitting groove is formed by an inclined face (e.g., a conical shape) expanding toward the cylinder bore opening and two side wall faces thereof are formed into planar shapes which are perpendicular to a longitudinal axis of the cylinder. Therefore, when a piston seal having a square or rectangular in cross sectional shape is fitted in the piston seal fitting groove thus shaped, a small clearance is created between a corner portion, at which an outer peripheral and the cylinder bore open side face of the piston seal intersect with each other, and a corner portion at which the bottom face of the piston seal fitting groove and the cylinder bore open side wall face intersect with each other. In a case where the piston seal fitted in the piston seal fitting groove is illustrated, it is general to show that the corner portions make close contact with each other while the aforementioned clearance being omitted. As a matter of fact, however, a small clearance 53 is established between the corner portion 51c, at which the outer peripheral 51a and cylinder bore open side face 51b of a piston seal 51 intersect with each other, and a corner portion 52c at which the bottom face 52a and the cylinder bore open side wall face 52b of a piston seal fitting groove 52 intersect, as shown in Fig. 4.

If, however, the clearance is formed on the entire open side of the cylinder bore, as described in the JP-B-44-23850, the piston seal is elastically deformed in a large scale in its entirety at the forward movement of the piston. This raises a drawback in durability of the piston seal. On the other hand, the structure described in the JP-UM-A-52-41446 is an improvement in the groove shape described in the JP-B-44-23850, however, even if the groove shape is adopted, the piston seal has a larger deformation amount. Moreover, with this clearance between the corner portions, the deformed state of the piston seal may be dispersed by influences of a fluid such as the air, grease or hydraulic fluid which has intruded into and has been confined in the clearance. This dispersion may fluctuate the rollback amount of the piston or may change the action feel at the braking time.

JP-A-08 177910 describes a disc brake according to the preamble of claim 1.

### SUMMARY OF THE INVENTION

It is, therefore, an object of the invention to provide a hydraulic vehicular disc brake, which can improve the durability of a piston seal retain a proper rollback amount and give a stable action feeling.

In order to achieve the aforementioned object, according to the invention, there is provided a hydraulic vehicular disc brake comprising the features of claim 1.

According to the hydraulic vehicular disc brake of the invention, since the close contact between the piston seal fitting groove and the piston seal is retained and the proper rollback establishing face is formed, the deformation amount of the piston seal can be reduced so that the durability is improved and the action feel at the braking time is stabilized while stabilizing the rollback amount.

Moreover, the groove bottom face and.the cylinder bore open side wall face are formed to intersect at a. right angle so that their close contact can be retained even by employing the piston seal having the square or rectangular section. By forming the rollback establishing face in combination of the plural inclined faces, still moreover, the deformation amount of the piston seal can be suppressed to the necessary minimum while retaining the proper rollback amount of the piston.

### BRIEF DESCRIPTION OF THE DRAWINGS

Fig. 1 is an enlarged sectional view showing an essential portion of a hydraulic vehicular disc brake according to an embodiment of the invention;
Fig. 2 is a sectional view of the same hydraulic vehicular disc brake;
Fig. 3 is an enlarged sectional view showing an essential portion of a disc brake, in which a rollback establishing face is formed by combining a plurality of inclined faces;
Fig. 4 is an enlarged sectional view showing an essential portion of one example of a hydraulic vehicular disc brake of the prior art; and
Fig. 5 is a view showing the hydraulic vehicular disc brake of the present invention, in a state that the piston is not inserted into the cylinder bore.

### DETAILED DESCRIPTION OF THE PREFERRED EMBODIMENTS

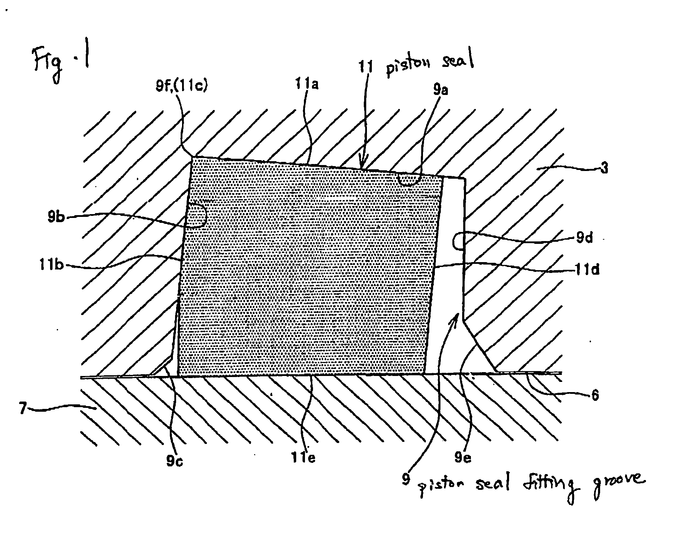

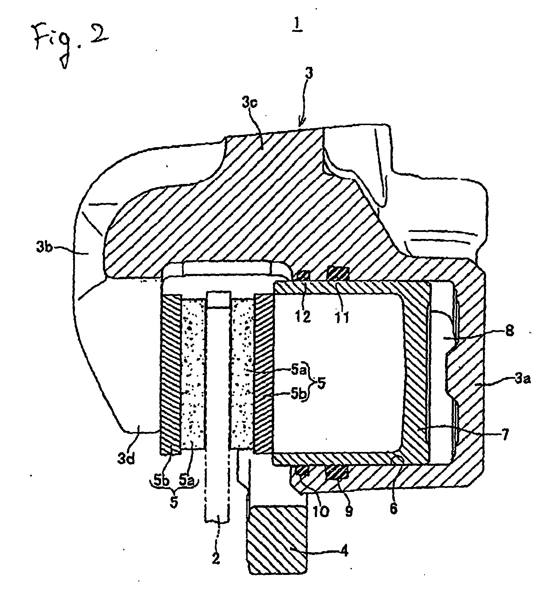

Fig. 1 is an enlarged sectional view showing an essential portion of a hydraulic vehicular disc brake according to one mode of embodiment of the invention, and Fig. 2 is a sectional view of the hydraulic vehicular disc brake.

First of all, a hydraulic vehicular disc brake 1 fixes a caliper body 3 on the vehicular body through the (not-shown) slide pins and a caliper bracket 4. The caliper body 3 includes an action portion 3a arranged on one side portion of a disc rotor 2, a reaction portion 3b arranged on the other side portion of the disc rotor 2, and a bridge portion 3c connecting the action portion 3a and the reaction portion 3b across the outer side of the disc rotor 2.

Each of paired friction pads 5 is arranged so as to be opposed to each other on the two side portions of the disc rotor 2. The friction pad 5 is composed of a lining 5a sliding contact with the side face of the disc rotor 2 and a backing plate 5b held by the caliper body 3. The friction pads 5 are so interposed on the inner side of the bridge portion 3c between the action portion 3a and the reaction portion 3b as to move in the axial direction of the disc. The friction pads 5 are mounted by a pad spring compressed between themselves and the bridge portion 3c are biased toward the, center of the disc.

The action portion 3a of the caliper body 3 is provided with a bottomed cylinder bore 6, which is opened on the side of the disc rotor 2 to receive a cup-shaped piston 7 liquid-tight and movably. This piston 7 is operated by hydraulic fluid fed to a hydraulic pressure chamber 8 defined between the piston 7 and the bottom portion of the cylinder bore 6 and moves in the cylinder bore 6 toward the disc rotor thereby to push the friction pad 5 on the action portion side toward the side face of the disc rotor 2.

In the inner peripheral of the cylinder bore 6, a piston seal fitting groove 9 is circumferentially formed at an axially intermediate portion, and an annular dust seal fitting groove 10 is circumferentially formed on the side closer to the open side of the cylinder bore than the piston seal fitting groove 9. In the piston seal fitting groove 9, there is fitted a piston seal 11, which comes into liquid-tight and movable contact with the outer peripheral of the piston 7 and which rolls back the piston with its restoring force. In the dust seal fitting groove 10, there is fitted a dust seal 12 which comes into movable contact with the outer peripheral of the piston 7 to thereby prevent dust from intruding into the cylinder bore.

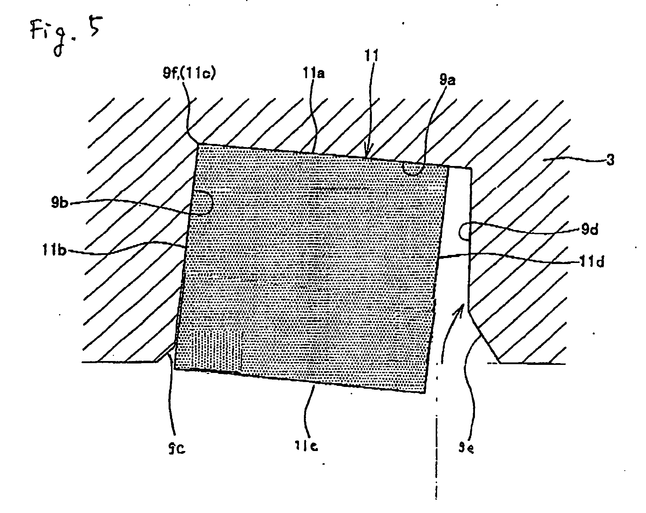

As shown in Figs 1 and 5, in the piston seal fitting groove 9, a bottom face 9a is formed into a such a conical face as has an inclined face expanding toward the open side of the cylinder bore 6, and a wall face 9b on the cylinder bore open side is formed into such a conical face of a gentle umbrella shape as has an inclined face intersecting at a right angle with the conical face of the bottom face 9a. At the corner portion on the inner peripheral of the cylinder bore open side wall face 9b in the piston seal fitting groove 9, there is formed a rollback establishing face 9c, which is inclined on the cylinder bore open side. At the corner portion on the inner peripheral side of a cylinder bore bottom side wall face 9d, there is formed a chamfered portion 9e, which allows the elastic deformation of the piston seal 11 when the piston 7 is pushed into the cylinder bore 6. Moreover, the piston seal fitting groove 9 has a depth slightly smaller than the radial thickness of the piston seal 11, and the bottom face 9a has a diameter slightly smaller than the external diameter of the piston seal 11 in this embodiment.
Furthermore, the groove width (i.e., the size in the direction of the cylinder axis) is set larger than the width size (i.e., the length in the axial direction) of the piston seal 11.

On the other hand, the piston seal 11 in the embodiment is called the "rectangular seal" having a rectangular shape in cross section, i.e., a square section containing radial and axial sides. When the piston seal 11 is fitted in the piston seal fitting groove 9 formed to have the aforementioned sectional shape, the piston seal 11 is so slightly deformed that its outer peripheral 11a and the bottom face 9a of the piston seal fitting groove 9 come into close contact. This is because the bottom portion 9a has a diameter slightly larger than the external diameter of the piston seal 11 and has a conical face diverging toward the cylinder bore opening. Moreover, the cylinder bore open side face 11b of the piston seal 11 and the cylinder bore open side wall face 9b come into close contact to establish the state, in which an corner portion 11c between the outer peripheral 11a and the cylinder bore open side face 11b of the piston seal 11 and a corner portion between the bottom face 9a and the cylinder bore side wall face 9b of the piston seal fitting groove 9 come into close contact. Thus, the piston seal 11 closely contacts (i.e., without leaving the clearance 53, as shown in Fig. 4), continuously from the outer peripheral 11a through the corner portion 11c to the cylinder bore open side face 11b, with the bottom face 9a, the corner portion 9f and the cylinder bore open side wall face 9b, which form the inner faces of the piston seal fitting groove 9. When the disc brake 1 is inactive, however, the cylinder bore open side face 11b of the piston seal 11 and the rollback establishing portion 9c take the state, in which they are spaced from each other by a predetermined distance. On the other hand, a cylinder bore bottom side face 11d of the piston seal 11 and the cylinder bore bottom side wall face 9d of the piston seal fitting groove 9 take a spaced state so that an inner peripheral 11e of the piston seal 11 takes a conical face (although not shown), in which it is slightly expanded on the cylinder bore open side.

While the piston 7 is being inserted into the cylinder bore 6, the cylinder bore bottom side of the inner peripheral 11e of the piston seal 11 is being forced to contact with the outer peripheral of the piston 7. As a result, the piston seal 11 is compressed and elastically deformed on its cylinder bore bottom side so that the inner peripheral of its cylinder bore open side face 11b is slightly spaced from the cylinder bore open side wall face 9b of the piston seal fitting groove 9.

When the hydraulic pressure chamber o..f the caliper body 8 is fed with the boosted hydraulic fluid (or the brake liquid) by the braking action of a driver, the piston 7 goes forward in the cylinder bore 6 in an opening direction (i . e . , toward the disc rotor) so that it pushes the friction pads 5 on the side of the action portion 3a toward the disc rotor 2 thereby to push the lining 5a of the friction pads 5 onto one side face of the disc rotor 2. As a reaction of this operation, the caliper body 3 is moved, while being guided by the slide pins, toward the action portion 3a so that reaction pawls 3d of the reaction portion 3b pushes the friction pad 5 on the side of the reaction portion 3b to thereby push the lining 5a of the friction pad 5 onto the other side face of the disc rotor 2. As a result, the braking force acts on the disc rotor 2.

As the piston 7 at the time of braking moves forward, the inner peripheral 11e of the piston seal 11 is dragged by the outer peripheral of the piston 7 so that piston seal 11 is elastically deformed to bring its cylinder bore open side face 11b into abutment at its inner peripheral end portion against the rollback establishing portion 9c and to bring its outer peripheral side into abutment against the whole surface of the cylinder bore open side wall face 9b of the piston seal fitting groove 9.

When the pressure in the hydraulic pressure chamber 8 is lowered by releasing the braking action, the piston 7 is rolled back to a predetermined amount by the force for the piston seal 11 to restore the shape shown in Fig. 1. This rollback amount corresponds to the deformation amount for the inner peripheral portion of the piston seal 11 to be elastically deformed toward the cylinder bore opening. By properly setting the shapes such as the angle or the diametrical size of the rollback establishing portion 9c relative to the cylinder bore open side wall face 9b, the rollback amount can be optimized according to the diameter or the using condition of the piston 7.

As a result, the piston seal 11 can suppress its elastic deformation amount to the necessary minimum so that it can improve its durability. No matter whether the disc brake 1 is active or inactive, the corner portion 11c and the corner portion 9f are held in close contact so that any fluid such as the air, the grease or the hydraulic fluid is not confined between the piston seal fitting groove 9 and the piston seal. As a result, the rollback amount can always be kept constant to stabilize the action feel at the braking time. Further, the cylinder bore open side wall face 9b and the bottom face 9a are formed to intersect at the right angle so that a piston seal of a square or rectangular section having an excellent productivity and manufactured at a low cost can be employed as the piston seal 11.

Moreover, the shape of the rollback establishing portion 9c can be suitably set according to the state of the piston seal fitting groove 9 or the piston seal 11 and to the necessary rollback amount. As shown in Fig. 3, for example, a plurality of inclined faces 9g and 9h having different angles of inclinations with respect to the cylinder bore open side wall face are formed in combination and continuously toward the cylinder bore opening so that the desired rollback amount can be set more reliably. An arc-shaped face may also be used in a portion of the rollback establishing portion 9c. In the embodiment, still moreover, the cylinder bore open side wall face 9b and the bottom face 9a of the piston seal fitting groove 9 are formed to intersect at the right angle so that the piston seal 11 of the square or rectangular section can be employed. In another sectional shape of the piston seal such as a deformed rectangle, however, those two faces need not to be formed at the right angle, but the piston seal fitting groove may also be formed to match the sectional shape of the piston seal. Furthermore, the shape of the piston seal fitting groove on the cylinder bore bottom side need not be restricted to that of the embodiment.

While there has been described in connection with the preferred embodiments of the present invention, it will be obvious to those skilled in the art that various changes and modification may be made therein without departing from the present invention, and it is aimed, therefore, to cover in the appended claims all such changes and modifications as fall within the scope of the present claims.

## Claims

1. A hydraulic vehicular disc brake (1) comprising:
a cylinder bore (6) formed in a caliper body (3) and having an open at a disc rotor (2) side;
a piston (7) pushing a friction pad (5) to a side face of the disc rotor (2), and inserted into the cylinder bore (6);
a seal fitting groove (9), of which cross sectional shape is rectangle, formed along with an inner peripheral of the cylinder bore (6); the groove (9) including:
a bottom face (9a);
a cylinder bore open side wall face (9b);
a corner (9f) at which the bottom face (9a) of the groove (9) intersects with the cylinder bore open side wall face (9b) of the groove (9); and
a rollback establishing face (9c); and
a seal (11), of which cross sectional shape is rectangle, fitted in the groove (9), the seal (11) liquid-tightly and movably supporting the piston (7) and rolling back the piston (7) with a restoring force thereof, the seal (11) including:
an outer peripheral face (11a);
a cylinder bore open side face (11b); and
a corner (11c) at which the outer peripheral face (11a) of the seal (11) intersects with the cylinder bore open side face (11b) of the seal (11),
wherein when the seal (11) is fitted to the groove (9), the seal (11) and the groove (9) are defined such that:
the outer peripheral face (11a) of the seal (11) closely contacts with the bottom face (9a) of the groove (9);
the cylinder bore open side face (11b) of the seal (11) closely contacts with the cylinder bore open side wall face (9b) of the groove (9);
the corner (11c) of the seal (11) closely contacts with the corner (9f) of the groove (9); and
an entire face of the seal (11) defined among the outer peripheral face (11a), the corner (11c) and the cylinder bore open side face (11b) of the seal (11) continuously contacts with the groove (9), and
the rollback establishing face (9c) is defined such that an inner peripheral side of the cylinder bore open side wall face (9b) of the groove (9) is inclined toward a cylinder bore open side so as to be apart from the cylinder bore open side face (11b) of the seal (11),
**characterized in that** a bottom face (9a) of the groove (9) is defined by a first inclined face expanding toward the cylinder bore open side; and
the cylinder bore open side wall face (9b) of the groove (9) is defined by a second inclined face which is perpendicular to the first inclined face.

2. The hydraulic vehicular disc brake as set forth in claim 1, wherein
the rollback establishing face (9c) is defined by one or more inclined faces (9g, 9h) having different angles relative to the cylinder bore open side wall face (9b) of the groove (9), and
the rollback establishing face (9c) continues to the cylinder bore open direction.

## Patentansprüche

1. Hydraulische Fahrzeugscheibenbremse (1), umfassend:
eine Zylinderbohrung (6), die in einem Bremssattelkörper (3) ausgebildet ist und eine Öffnung an der Seite des Scheibenrotors (2) aufweist,
einen Kolben (7), der einen Bremsklotz (5) zu einer Seitenfläche des Scheibenrotors (2) drückt und in die Zylinderbohrung (6) eingeführt ist,
eine Dichtungseinpass-Nut (9) mit rechteckigem Querschnitt, die entlang eines Innenumfangs der Zylinderbohrung (6) ausgebildet ist, wobei die Nut (9) aufweist:
eine Bodenfläche (9a),
eine zur offenen Seite der Zylinderbohrung weisende Wandfläche (9b),
ein Eck (9f), wo die Bodenfläche (9a) der Nut (9) die zur offenen Seite der Zylinderbohrung weisende Wandfläche (9b) der Nut (9) kreuzt, und
eine Rückwälzeinrichtungsfläche (9c), und
eine Dichtung (11) mit rechteckigem Querschnitt, die in die Nut (9) eingepasst ist, wobei die Dichtung (11) den Kolben (7) luftdicht und beweglich stützt und den Kolben (7) mit einer Wiederherstellungskraft hiervon zurück wälzt, wobei die Dichtung (11) aufweist:
eine Außenumfangsfläche (11a),
eine zur offenen Seite der Zylinderbohrung weisende Fläche (11b), und
ein Eck (11c), wo die Außenumfangsfläche (11a) der Dichtung (11) die zur offenen Seite der Zylinderbohrung weisende Fläche (11b) der Dichtung (11) kreuzt,
wobei, wenn die Dichtung (11) in die Nut (9) eingepasst ist, die Dichtung (11) und die Nut (9) derart definiert sind, dass:
die Außenumfangsfläche (11a) der Dichtung (11) die Bodenfläche (9a) der Nut (9) eng berührt,
die zur offenen Seite der Zylinderbohrung weisende Fläche (11b) der Dichtung (11) die zur offenen Seite der Zylinderbohrung weisende Wandfläche (9b) der Nut (9) eng berührt,
das Eck (11c) der Dichtung (11) das Eck (9f) der Nut (9) eng berührt, und
eine gesamte zwischen der Außenumfangsfläche (11a), dem Eck (11c) und der zur offenen Seite der Zylinderbohrung weisenden Fläche (11b) der Dichtung (11) definierte Fläche der Dichtung (11) die Nut (9) kontinuierlich berührt, und
die Rückwälzeinrichtungsfläche (9c) derart definiert ist, dass eine Innenumfangsseite der zur offenen Seite der Zylinderbohrung weisenden Wandfläche (9b) der Nut (9) in Richtung der offenen Seite der Zylinderbohrung geneigt ist, um von der zur offenen Seite der Zylinderbohrung weisenden Fläche (11b) der Dichtung (11) getrennt zu sein, **dadurch gekennzeichnet, dass** eine Bodenfläche (9a) der Nut (9) durch eine erste geneigte Fläche definiert ist, die sich in Richtung der offenen Seite der Zylinderbohrung aufweitet, und
die zur offenen Seite der Zylinderbohrung weisende Wandfläche (9b) der Nut (9) durch eine zweite geneigte Fläche definiert ist, die senkrecht zur ersten geneigten Fläche ist.

2. Hydraulische Fahrzeugscheibenbremse gemäß Anspruch 1, bei der
die Rückwälzeinrichtungsfläche (9c) durch eine oder mehrere geneigte Flächen (9g, 9h) definiert ist, die unterschiedliche Winkel relativ zu der zur offenen Seite der Zylinderbohrung weisenden Wandfläche (9b) der Nut (9) aufweisen, und
die Rückwälzeinrichtungsfläche (9c) zur offenen Richtung der Zylinderbohrung fortläuft.

## Revendications

1. Frein à disque hydraulique pour véhicule (1) comprenant:
un alésage cylindrique (6) formé dans un corps d'étrier (3) et ayant une ouverture au niveau d'un côté rotor formant disque (2) ;
un piston (7) poussant une plaquette de friction (5) vers une face latérale du rotor formant disque (2), et inséré dans l'alésage cylindrique (6) ;
une rainure de montage de joint (9), dont la forme en coupe transversale est rectangulaire, formée le long d'une périphérie intérieure de l'alésage cylindrique (6) ; la rainure (9) incluant :
une face de fond (9a) ;
une face de paroi latérale ouverte d'alésage cylindrique (9b) ;
un angle (9f) au niveau duquel la face de fond (9a) de la rainure (9) coupe la face de paroi latérale ouverte d'alésage cylindrique (9b) de la rainure (9) ; et
une face d'établissement de déplacement arrière (9c) ; et
un joint (11), dont la forme en coupe transversale est rectangulaire, monté dans la rainure (9), le joint (11) assurant l'étanchéité au fluide et supportant de façon mobile le piston (7) et déplaçant le piston (7) en arrière avec une force de retour de ce dernier, le joint (11) incluant :
une face périphérique extérieure (11a) ;
une face latérale ouverte d'alésage cylindrique (11b) ; et
un angle (11c) au niveau duquel la face périphérique extérieure (11a) du joint (11) coupe la face latérale ouverte d'alésage cylindrique (11b) du joint (11),
dans lequel, lorsque le joint (11) est monté dans la rainure (9), le joint (11) et la rainure (9) sont définis de sorte que :
la face périphérique extérieure (11a) du joint (11) est en contact étroit avec la face de fond (9a) de la rainure (9) ;
la face latérale ouverte d'alésage cylindrique (11b) du joint (11) est en contact étroit avec la face de paroi latérale ouverte d'alésage cylindrique (9b) de la rainure (9) ;
l'angle (11c) du joint (11) est en contact étroit avec l'angle (9f) de la rainure (9) ; et
une face entière du joint (11) définie entre la face périphérique extérieure (11a), l'angle (11c) et la face latérale ouverte d'alésage cylindrique (11b) du joint (11) est continuellement en contact avec la rainure (9), et
la face d'établissement de déplacement arrière (9c) est définie de sorte qu'un côté périphérique intérieur de la face de paroi latérale ouverte d'alésage cylindrique (9b) de la rainure (9) est incliné vers un côté ouvert d'alésage cylindrique de façon à être à l'écart de la face latérale ouverte d'alésage cylindrique (11b) du joint (11),
**caractérisé en ce qu'**une face de fond (9a) de la rainure (9) est définie par une première face inclinée s'étendant vers le côté ouvert d'alésage cylindrique ; et
la face de paroi latérale ouverte d'alésage cylindrique (9b) de la rainure (9) est définie par une seconde face inclinée qui est perpendiculaire à la première face inclinée.

2. Frein à disque hydraulique pour véhicule selon la revendication 1, dans lequel
la face d'établissement de déplacement arrière (9c) est définie par une ou plusieurs faces inclinées (9g, 9h) ayant des angles différents par rapport à la face de paroi latérale ouverte d'alésage cylindrique (9b) de la rainure (9), et
la face d'établissement de déplacement arrière (9c) continue vers le sens d'ouverture d'alésage cylindrique.
